# EUROPÄISCHE PATENTSCHRIFT

(11) **EP 2 806 005 B1**
(45) Veröffentlichungstag und Bekanntmachung des Hinweises auf die Patenterteilung: **17.07.2019**
(21) Anmeldenummer: 14168223.7
(22) Anmeldetag: 14.05.2014
(51) Int. Cl.: C09J 7/00

(54) **UV-vernetzbare, harzmodifizierte Klebemasse**
UV-crosslinkable, resin modified adhesive mass
Masse collante à résine modifiée, pouvant être réticulée par UV

(30) Priorität: 20.05.2013 DE 102013211628
(43) Veröffentlichungstag der Anmeldung: 26.11.2014
(73) Patentinhaber: tesa SE, 22848 Norderstedt (DE)
(72) Erfinder: Auktun, Inga, 22844 Norderstedt (DE); Siebert, Michael, 22869 Schenefeld (DE); Prenzel, Alexander, 20259 Hamburg (DE); Zöllner, Stephan, 21244 Buchholz /Nordheide (DE)

(56) Entgegenhaltungen:
- EP-A1- 1 914 284
- EP-A1- 2 192 148
- EP-A2- 1 300 454

## Beschreibung

Die Erfindung betrifft das technische Gebiet der vernetzbaren Schmelzklebstoffe, speziell der UV-vernetzbaren Polyacrylat-Schmelzklebstoffe, wie sie beispielsweise zur Herstellung von Haftklebemassen verwendet werden. Insbesondere schlägt die Erfindung eine Polyacrylat-basierende Klebmasse zur Herstellung eines Klebebandes mit verbessertem Flagging-Verhalten vor.

Schmelzklebstoffe erlangen zunehmende Bedeutung in industriellen Klebeprozessen. Da sie sich lösemittelfrei verarbeiten lassen, ermöglichen sie ressourcenschonende Verfahren, indem insbesondere das aufwändige Entfernen des Lösemittels nach erfolgtem Ausbringen des Klebstoffs entfällt. Auf dem Gebiet der Klebebandherstellung wird häufig so vorgegangen, dass der Klebstoff aus der Schmelze auf einen Träger aufgebracht und nachfolgend thermisch oder mittels Strahlung unter Ausbildung höhermolekularer Polymere vernetzt wird. Die derart zu verarbeitenden Klebmassen werden auch als vernetzbare Schmelzklebstoffe bezeichnet.

Ein wichtiges und häufig angewandtes Verfahren zur Vernetzung von insbesondere Haftschmelzklebstoffen ist die UV-initiierte Vernetzung. Als UV-vernetzbare Haftschmelzklebstoffe, wie sie für Klebebänder benötigt werden, stehen grundsätzlich zwei Polymersysteme zur Verfügung. Dabei handelt es sich zum einen um Acrylatpolymere, die zunehmend mit einpolymerisierten photoreaktiven Gruppen ausgestattet sind, und zum anderen um Styrolblockcopolymere mit freien Vinylgruppen. Bei den Styrolblockcopolymeren ist der Zusatz eines Photoinitiators in der Regel zwingend erforderlich. Die UV-vernetzbaren Acrylatsysteme sind heute verbreiteter als Systeme auf Basis von Styrolblockcopolymeren.

Acrylathaftklebemassen sind unter anderem deshalb vorteilhaft, weil eine Vielzahl unterschiedlicher Comonomere zur Polymerisation eingesetzt werden können und sich somit die klebtechnischen Eigenschaften variieren lassen. Als Hauptkomponente eingesetzte Comonomere umfassen üblicherweise Alkylester der Acryl- und Methacrylsäure, in geringeren Anteilen werden beispielsweise Acrylsäure, Methacrylsäure, Acrylamide, Maleinsäureanhydrid, Hydroxyacrylate oder Itakonsäure einpolymerisiert. Zur Herstellung der Polyacrylate wird die radikalische Polymerisation in Lösung oder in Emulsion angewandt. Beide Techniken weisen Probleme auf, sind aber sehr kostengünstig und werden daher seit langem in größerem Maßstab durchgeführt.

Ein Verfahren zur Herstellung einer Polyacrylathaftklebemasse über ein Heißschmelzverfahren wird beispielsweise in WO 02/28963 A2 beschrieben. Dabei wird ein oligomer vorliegender polyfunktioneller α-Spalter vor der Verarbeitung im Heißschmelzverfahren zu dem zu vernetzenden Polymer gegeben; die UV-Vernetzung erfolgt dann nach der Verarbeitung.

Eine Zusammensetzung auf Basis eines schmelzfähigen, UV-vernetzbaren Polyacrylats ist Gegenstand der WO 2004/083302 A1. Die Zusammensetzung wird als Schmelzklebstoff verwendet. Sie enthält eine oligomere Verbindung mit UV-vernetzbaren funktionellen Gruppen, die mit dem Polyacrylat reaktionsfähig sind.

Naturgemäß bewirkt die UV-Vernetzung bzw. die dadurch bedingte Entstehung von Polymerketten mit höherem Molekulargewicht eine Erhöhung der Kohäsion innerhalb der Klebemasse. Andererseits wird mit zunehmendem Vernetzungsgrad die Adhäsion erheblich gesenkt. Eine ausgewogene Balance zwischen Kohäsion und Adhäsion ist beispielsweise im Hinblick auf das sogenannte "Flaggingverhalten" der Klebemasse von großer Bedeutung.

Unter Flagging wird bei einem um einen Körper gewickelten Klebeband die Neigung zum "Abstehen" eines Klebebandendes verstanden, also das Bestreben, aus einer abgewinkelten oder abgerundeten in eine planare Form zurückzukehren. Relevant ist dies beispielsweise bei Klebebändern, die zum Umwickeln von Kabeln zum Zweck der Isolierung oder der Bündelung mehrerer Kabel verwendet werden. Hier führt ein ausgeprägtes Flagging zum Aufstellen des Klebebandes und in der Folge zum Entrollen, so dass schlimmstenfalls zu isolierende Bereiche des Kabels wieder freigelegt werden oder eine Bündelung von Kabeln aufgelöst wird.

Das Ausmaß des Flaggings wird im Wesentlichen durch das Zusammenwirken der durch den Klebstoff bewirkten Haltekraft, der Steifigkeit des Trägers und des Durchmessers des Kabelsatzes bestimmt.

Man hat festgestellt, dass bei Polyacrylatmassen ohne Harzbeimischung das Kohäsions-Adhäsions-Verhältnis nur in einem extrem engen Bereich gesteuert werden kann. Schon bei geringen UV-Dosen kann eine zu starke Vernetzung eintreten, so dass das Adhäsionsmaximum nicht stabil eingestellt werden kann. Variationen von Eigenschaften der Klebmassen durch veränderte Maschinenparameter sind unter diesen Voraussetzungen kaum möglich, weil das Eigenschaftsprofil nahezu vollständig durch den Vernetzungsgrad determiniert ist. Aus diesem Grund werden UV-vernetzbare Polyacrylatmassen in der Regel mit Harzen und/oder Füllstoffen abgemischt, weil sich in diesem Fall ein größeres Prozessfenster ergibt, um Kohäsion und Adhäsion aufeinander abzustimmen.

Abmischungen mit Harzen haben in der Regel hauptsächlich zum Ziel, die Adhäsion zu erhöhen. Werden dafür Harze mit einem niedrigen Erweichungspunkt, z.B. Kolophoniumharze verwendet, wird damit aber wiederum die Kohäsion der Masse herabgesetzt. Setzt man Harze mit einem sehr hohen Erweichungspunkt ein, lässt sich die Kohäsion wieder verbessern. Gleichzeitig verschlechtert sich jedoch das Auffließverhalten im Vergleich zur unabgemischten Masse. Damit wird es sehr schwierig, die zeitliche Konstanz der Balance aus Adhäsion und Kohäsion zu gewährleisten. Diese jedoch ist gerade für Klebebänder zur Kabelumwickelung von hoher Bedeutung.

Üblicherweise werden Harze zu einem Gewichtsanteil von deutlich über 10 % eingesetzt, häufig beispielsweise zu etwa 15 bis 50 %, um einen signifikanten Einfluss des Harzes auf die Adhäsion zu erreichen. Ausführlichere Angaben zum Stand der Technik auf dem Gebiet der Formulierung von UV-vernetzenden Haftschmelzklebstoffen enthält eine in "adhäsion Kleben & Dichten", Volume 49, Issue 5, Seiten 27-31 erschienene Publikation (A.Dobmann, B.Blickenstorfer; Collano AG).

Zusammenfassend lässt sich feststellen, dass ein anhaltender Bedarf an UV-vernetzten Haftklebemassen mit stabilem Eigenschaftsprofil, insbesondere mit stabilem Kohäsions-Adhäsions-Verhältnis, besteht.

Aufgabe der Erfindung ist es daher, eine UV-vernetzbare Masse zur Verfügung zu stellen, die nach erfolgter Vernetzung eine Haftklebemasse mit einem ausgewogenen klebtechnischen Eigenschaftsprofil und insbesondere mit sehr geringer Flagging-Neigung ergibt. Die Masse soll darüber hinaus mit einer Vielzahl von Trägermaterialien, insbesondere auch mit Gewebeträgern, kombinierbar sein.

Überraschend hat sich gezeigt, dass die Aufgabe durch die Beimischung von Terpenphenolharzen in einer unerwartet niedrigen Konzentration gelöst werden kann.

Ein erster Gegenstand der Erfindung ist daher eine Zusammensetzung, die mindestens einen UV-vernetzbaren Polyacrylat-Schmelzklebstoff und mindestens ein Terpenphenolharz enthält, wobei die Gesamtkonzentration der Terpenphenolharze, bezogen auf das Gesamtgewicht der Zusammensetzung, 2 bis 4 Gew.-% beträgt. Eine aus einer derartigen Zusammensetzung erhaltene Haftklebemasse zeigt eine signifikant verringerte Repulsionstendenz und zeichnet sich daneben u. a. durch gute Klebkraft- und Elastizitätswerte sowie ausreichende Scherstandzeiten aus.

Unter einem "Polyacrylat" wird ein Polymer verstanden, welches allgemein durch radikalische Polymerisation von Acryl- und/oder Methylacrylmonomeren sowie gegebenenfalls weiteren, copolymerisierbaren Monomeren erhältlich ist. Zu den Acryl- und/oder Methacrylsäuremonomeren werden erfindungsgemäß sowohl Acryl- und Methacrylsäure als auch Acryl- und Methacrylsäureester gezählt. Insbesondere wird unter einem Polyacrylat ein Polymer verstanden, dessen Monomerbasis zu mindestens 30 Gew.-% aus Acrylsäure, Methacrylsäure, Acrylsäureestern und/oder Methacrylsäureestern besteht, wobei Acrylsäureester und/oder Methacrylsäureester generell zumindest anteilig, bevorzugt zu mindestens 30 Gew.-%, bezogen auf das Gesamtgewicht des Polymers, enthalten sind.

Bevorzugt lässt sich das mindestens eine UV-vernetzbare Polyacrylat der erfindungsgemäßen Zusammensetzung auf ein Monomerengemisch zurückführen, das die folgenden Komponenten enthält:
a) 65 bis 100 Gew.-% (Meth-)acrylsäure und (Meth-)Acrylsäurederivate der allgemeinen Formel 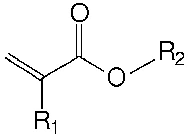 wobei R₁ = H oder CH₃ und R₂ eine Alkylkette mit 1 bis 20 C-Atomen ist,
b) 0 bis 35 Gew.-% Vinylverbindungen mit funktionellen Gruppen,
   wobei die Summe aller eingesetzten Monomeren 100 Gew.-% ergibt.

Die Herstellung des zu vernetzenden Polymers erfolgt bevorzugt über eine freie oder kontrollierte radikalische Polymerisation. Die Polymerisation kann in Polymerisationsreaktoren durchgeführt werden, die im Allgemeinen mit einem Rührer, mehreren Zulaufgefäßen, Rückflußkühler, Heizung und Kühlung versehen sind und für das Arbeiten unter N2-Atmosphäre und Überdruck ausgerüstet sind.

Die radikalische Polymerisation wird üblicherweise in Gegenwart eines oder mehrerer organischer Lösungsmittel und/oder in Gegenwart von Wasser oder in Substanz durchgeführt. Es wird dabei angestrebt, die verwendete Lösungsmittelmenge so gering wie möglich zu halten. Die Polymerisationszeit beträgt - je nach Umsatz und Temperatur - zwischen 6 und 48 Stunden. Das gewichtsmittlere Molekulargewicht (bestimmt durch Größenausschlusschromatographie) der Polymere variiert zwischen 300.000 und 2.000.000 g/mol, bevorzugt zwischen 600.000 und 1.200.000 g/mol.

Zur Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Sehr bevorzugt wird ein Lösungsmittelgemisch aus Aceton und Isopropanol eingesetzt, wobei der Isopropanolgehalt zwischen 1 und 10 Gewichtsprozent liegt. Als Polymerisationsinitiatoren werden übliche radikalbildende Verbindungen, wie beispielsweise Peroxide und Azoverbindungen, eingesetzt. Auch Initiatorgemische können verwendet werden. Bei der Polymerisation können auch Thiole als weitere Regler zur Molekulargewichtssenkung und Verringerung der Polydispersität eingesetzt werden. Als weitere sogenannte Polymerisationsregler können z.B. Alkohole und Ether verwendet werden.

Vorzugsweise ist das mindestens eine UV-vernetzbare Polyacrylat der erfindungsgemäßen Zusammensetzung ein schmelzfähiges Polyacrylat, d.h. es lässt sich aus der Schmelze auf einen Träger auftragen.

Zur Steigerung der Vernetzungseffizienz werden die unvernetzten Polymere optional mit Vernetzern abgemischt: Geeignete Vernetzersubstanzen in diesem Sinne sind beispielsweise bi- oder multifunktionelle (Meth)Acrylate. Verwendet werden können hier aber auch alle weiteren, dem Fachmann geläufigen bi- oder multifunktionellen Verbindungen, die in der Lage sind, Polyacrylate zu vernetzen.

Unter einem Terpenphenolharz wird entsprechend dem allgemeinen Fachwissen ein Harz verstanden, das durch Säure-katalysierte Addition von Phenolen an Terpene erhältlich ist. Die Terpenbasis des Terpenphenolharzes besteht bevorzugt aus α-Pinen, β-Pinen, Δ-3-Caren und/oder Limonen. Erfindungsgemäß bevorzugt beträgt die Gesamtkonzentration der Terpenphenolharze, bezogen auf das Gesamtgewicht der erfindungsgemäßen Zusammensetzung, 2 bis 4 Gew.-%, stärker bevorzugt 2,5 bis 3,5 Gew.-%.

Das Terpenphenolharz hat bevorzugt eine Erweichungstemperatur (Ring- & Ball-Erweichungspunkt, gemessen nach ASTM E28-99) von mindestens 90°C, stärker bevorzugt von mindestens 105°C, insbesondere von mhdestens 110°C. Besonders bevorzugt hat das Terpenphenolharz eine Erweichungstemperatur von 95 bis 135°C.

Ein weiterer Gegenstand der Erfindung ist eine Haftklebemasse, die durch UV-Vernetzung einer erfindungsgemäßen Zusammensetzung erhältlich ist. Die UV-Vernetzung erfolgt bevorzugt bei einer UV-Dosis von < 100 mJ/cm², stärker bevorzugt von < 80 mJ/cm², besonders bevorzugt von < 60 mJ/cm², beispielsweise von < 35 mJ/cm².

Die erfindungsgemäße Haftklebemasse kann ein oder mehrere Additiv(e) wie beispielsweise primäre und sekundäre Alterungsschutzmittel, Lichtschutzmittel und Ozonschutzmittel enthalten. Weiterhin kann sie einen oder mehrere Füllstoff(e) wie Fasern, Ruß, Zinkoxid, Titandioxid, Mikrovollkugeln, Kieselsäure, Silikate und/oder Kreide enthalten. Auch der Zusatz weiterer thermischer Vernetzer, beispielsweise von Isocyanaten, insbesondere von mit UV-Schutzgruppen blockierten Isocyanaten sowie von weiteren, dem Fachmann bekannten thermischen Vernetzern ist möglich.

Ein weiterer Gegenstand der Erfindung ist ein Klebeband, das durch Auftragen einer erfindungsgemäßen Zusammensetzung aus der Schmelze auf einen Träger und UV-Vernetzung der Zusammensetzung erhältlich ist. Die Zusammensetzung wird bevorzugt mit einem Flächengewicht von 20 bis 120 g/m², stärker bevorzugt von 40 bis 100 g/m², besonders bevorzugt von 60 bis 80 g/m² aufgetragen. Die UV-Vernetzung erfolgt bevorzugt bei einer UV-Dosis von < 100 mJ/cm², stärker bevorzugt von < 80 mJ/cm², besonders bevorzugt von < 60 mJ/cm², beispielsweise von < 35 mJ/cm².

Der Träger des erfindungsgemäßen Klebebands ist bevorzugt ein Gewebe-, Vlies- oder Folienträger. Sofern der Träger ein Folienträger ist, sind als Material der Folie Polypropylen, insbesondere biaxial orientiertes Polypropylen (BOPP), Polyethylenterephthalat (PET), Polyvinylchlorid (PVC) oder Polyester besonders bevorzugt. Die UV-Vernetzung findet vorteilhaft direkt auf dem Träger statt.

Erfindungsgemäß besonders bevorzugt ist der Träger ein textiler Träger, bevorzugt ein Gewebe, insbesondere ein Polyestergewebe, ein Vlies oder Gewirk. Dabei ist es weiter bevorzugt, wenn der Träger ein Flächengewicht von 30 bis 250 g/m², vorzugsweise von 50 bis
200 g/m², besonders bevorzugt von 60 bis 150 g/m² aufweist.

Als textiler Träger können beispielsweise Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandenen einzelnen oder in Büscheln angeordneten Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Als besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH zu beziehen. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Zusätzlich können weitere durchstechbare Flächengebilde und/oder streufähige Medien eingebracht werden. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer, bekannt.

Besonders geeignet sind auch Nadelvliese. Beim Nadelvlies wird ein Faserflor zu einem Flächengebilde mit Hilfe von mit Widerhaken versehenen Nadeln verbunden. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u. ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern. Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden. Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch der Träger einen sehr geringen Foggingwert.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können eine Vielzahl weiterer Fasern zur Herstellung des Vlieses eingesetzt werden. Des Weiteren sind Garne, gefertigt aus den vorgenannten Fasermaterialien, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder aus Fäden aus natürlichen Rohstoffen bestehen.

Bevorzugt wird als Material für den Träger Polyester aufgrund der hervorragenden Alterungsbeständigkeit und der hervorragenden Medienbeständigkeit gegenüber Chemikalien und Betriebsmitteln wie Öl, Benzin, Frostschutzmittel u. ä. verwendet. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Zur Ummantelung von langgestrecktem Gut eignet sich auch ein Träger, der aus Papier, aus einem Laminat, aus einer Folie (zum Beispiel PP, PE, PET, PA, PU), aus Schaumstoff oder aus einer geschäumten Folie besteht.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u. ä., beispielsweise in einen ummantelten Kabelbereich und lassen sich über geeignete Auswahl des Werkstoffes den Anforderungen weitgehend anpassen: mit Polyurethanen und/oder Copolymeren aus Polyolefinen lassen sich beispielsweise flexible und elastische Ummantelungen erzeugen, mit Polyester und/oder Polyamiden werden gute Abrieb- und Temperaturbeständigkeiten erreicht. Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Ein weiterer Gegenstand der Erfindung ist die Verwendung einer erfindungsgemäßen Zusammensetzung zur Herstellung einer Haftklebemasse. Ein weiterer Gegenstand der Erfindung ist die Verwendung einer erfindungsgemäßen Zusammensetzung zum Auftragen auf ein Trägermaterial bzw. auf einen Träger. Ein weiterer Erfindungsgegenstand ist die Verwendung einer erfindungsgemäßen Zusammensetzung zur Herstellung von Klebebändern zur Kabelummantelung (Wire Harnessing Tapes).

Ein weiterer Gegenstand der Erfindung ist die Verwendung einer erfindungsgemäßen Haftklebemasse zur Herstellung von Klebebändern zur Kabelummantelung (Wire Harnessing Tapes). Ein weiterer Gegenstand der Erfindung ist die Verwendung einer erfindungsgemäßen Haftklebemasse als Klebemasse eines Klebebandes zur Kabelummantelung (Wire Harnessing Tape).

Ein weiterer Gegenstand der Erfindung ist die Verwendung eines erfindungsgemäßen Klebebandes zum Ummanteln von langgestrecktem Gut, wobei das Klebeband in einer Schraubenlinie um das langgestreckte Gut geführt wird.

Ein weiterer Gegenstand der Erfindung ist die Verwendung eines erfindungsgemäßen Klebebandes zum Ummanteln von langgestrecktem Gut, wobei das langgestreckte Gut in axialer Richtung von dem Klebeband umhüllt wird.

Ein weiterer Gegenstand der Erfindung ist ein langgestrecktes Gut, insbesondere ein Kabelsatz, das mit einem erfindungsgemäßen Klebeband ummantelt ist.

### Beispiele

### Durchgeführte Tests:

### Flaggingverhalten - TFT

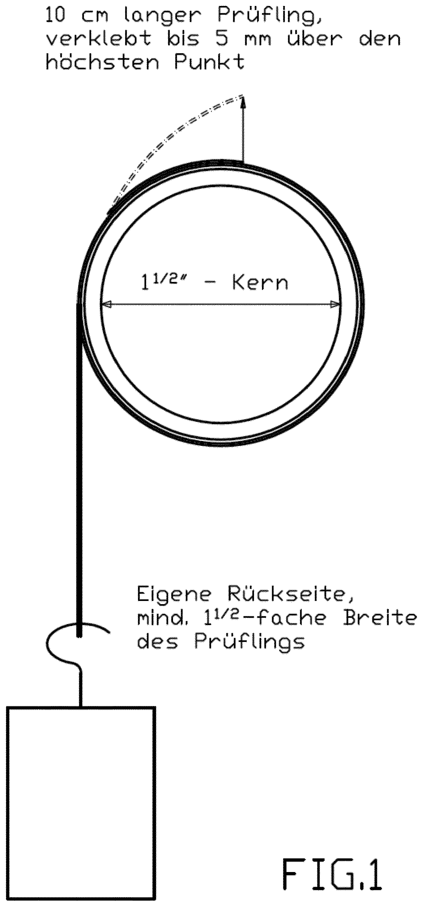

Die Abflaggresistenz wurde nach der sogenannten TFT-Methode (Threshold Flagging Time) ermittelt. Dabei kommt ein Test zum Einsatz, bei dem durch die Applikation der flach präparierten Prüflinge auf einem 1½"-Kern eine zusätzliche Biegespannung erzeugt wird. Die Kombination aus Zugbelastung durch ein Prüfgewicht und Biegespannung bewirkt ein Flagging-ähnliches Ablösen des Klebebandes vom verklebten oberen Ende her und ein letztendliches Versagen durch Abfallen der Prüflinge (siehe Figur 1, in der auch der schematische Aufbau gezeigt ist).
Die Zeit in Minuten bis zum Abfallen ist das Ergebnis.
Die ausschlaggebenden Parameter für die Haltezeit der Prüflinge sind Gewicht und Temperatur, wobei das Gewicht so zu wählen ist, dass sich Werte von mindestens 100 min ergeben.

Der Prüfdorn ist ein 1½"-Pappkern mit 42 ± 2 mm Außendurchmesser, versehen mit einer Markierungslinie 5 mm neben der Scheitellinie.
Der Haftgrund ist die eigene Rückseite des Klebebands.
Der Handroller hat ein Gewicht von 2 kg.
Das Prüfgewicht beträgt 1 kg.
Das Prüfklima ist 23 ± 1 °C bei 50 ± 5 % rel. Feuchte beziehungsweise 40 °C im Wärmeschrank.

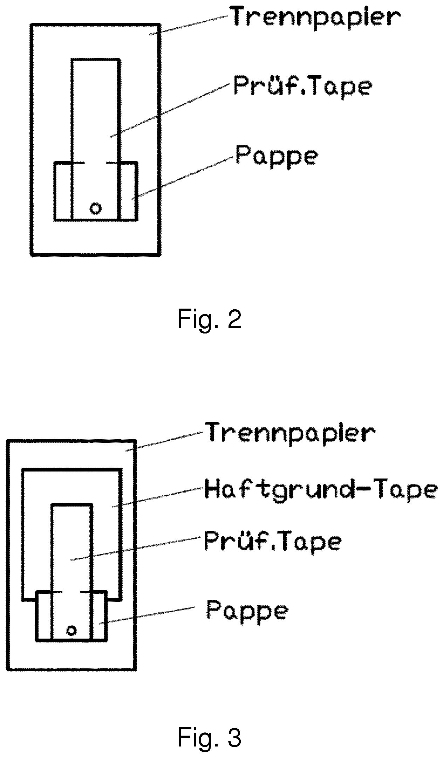

Die Prüfung erfolgt an Streifen von 19 mm breiten Klebebändern. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden.
Unter eines der Enden eines jeden Streifens wird ein Pappkärtchen geklebt und der Verbund gelocht (siehe Figur 2).

Die Prüfstreifen werden nun einzeln mittig auf Streifen des breiteren Haftgrunds (Klebeband in 1 ½-facher Breite des zu prüfenden Klebebands) verklebt, so dass das Pappkärtchen noch knapp (2 bis 3 mm) am Ende überlappt (siehe Figur 3).

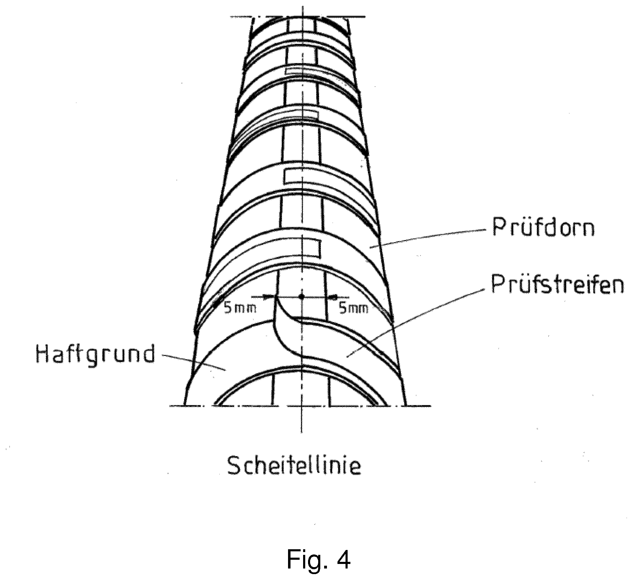

Die Prüflinge werden mit dem 2 kg-Handroller in 3 Zyklen mit einer Geschwindigkeit von 10 m/min überrollt.
Die fertigen Prüfmuster werden nun so auf den Pappkern geklebt, dass das obere Ende des Prüflings den Scheitelpunkt um 5 mm überlappt (siehe Figur 4). Dabei darf nur der Haftgrund und nicht der Prüfling angedrückt werden.

Die fertig präparierten Prüflinge werden für 20 ± 4 Stunden ohne Gewichtsbelastung in einem Klimaraum bei 40 °C belassen.
Danach werden Gewichte mit einer Masse von einem Kilogramm angehängt und die Messuhren gestartet.
Die Messung endet nach Versagen aller drei Prüflinge eines Musters.
Der Median der drei Einzelmessungen wird in Minuten angegeben.

### Klebkraft Stahl 90°

Die Bestimmung der Klebkraft Stahl erfolgt bei einem Prüfklima von 23 °C +/- 1 °C Temperatur und 50 % +/- 5 % rel. Luftfeuchte. Die Muster werden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Danach erfolgt das Anrollen des Prüfmusters auf den Stahluntergrund. Hierzu wird das Tape mit einer 2 kg Rolle fünfmal hin und her, bei einer Aufrollgeschwindigkeit von 10 m/min, überrollt. Unmittelbar nach dem Anrollen wird die Stahlplatte in eine spezielle Halterung geschoben, die es ermöglicht, das Muster in einem Winkel von 90 °C senkrecht nach oben abzuziehen. Die Klebkraftmessung erfolgt mit einer Zwick-Zugprüfmaschine. Die Messergebnisse sind in N/cm angegeben und sind gemittelt aus drei Messungen.

### Klebkraft Rückseite 90°

Die Bestimmung der Rückseiten-Klebkraft erfolgte entsprechend der Bestimmung der Klebkraft auf Stahl mit dem Unterschied, dass zunächst auf die Stahlplatte ein Klebeband 51026 (tesa®, einseitiges Klebeband mit Rückseite aus PET-Gewebe) aufgeklebt wurde. Auf dieses wurde dann das zu prüfende Muster geklebt. Der weitere Testablauf entspricht der Prüfung Klebkraft Stahl.

### Scherstandzeit

Ein 13 mm breiter und mehr als 20 mm (beispielsweise 30 mm) langer Streifen des Klebebandes wird auf eine glatte Stahloberfläche, die dreimal mit Aceton und einmal mit Isopropanol gereinigt wurde, aufgebracht. Die Verklebungsfläche beträgt 20 mm x 13 mm (Länge x Breite), wobei das Klebeband die Prüfplatte am Rand überragt (beispielsweise um 10 mm entsprechend oben angegebener Länge von 30 mm). Anschließend wird das Klebeband viermal mit einem Anpressdruck entsprechend einem Gewicht von 2 kg auf den Stahlträger gedrückt. Diese Probe wird senkrecht aufgehängt, so dass das überstehende Ende des Klebebandes nach unten zeigt.
Bei Raumtemperatur wird ein Gewicht von 1 kg an dem überstehenden Ende des Klebebandes befestigt. Die Messung wird bei Normalklima (23 °C +/- 1 °C, 55 % +/- 5 % Luftfeuchtigkeit) durchgeführt.
Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

### Mikroschertest

Dieser Test dient der Schnellprüfung der Scherfestigkeit von Klebebändern unter Temperaturbelastung.

### Messprobenpräparation:

Ein aus dem jeweiligen Probenmuster geschnittenes Klebeband (Länge ca. 50 mm, Breite 10 mm) wird so auf eine mit Aceton gereinigte Stahl-Prüfplatte verklebt, dass die Stahlplatte das Klebeband rechts und links überragt und dass das Klebeband die Prüfplatte am oberen Rand um 2 mm überragt. Die Verklebungsfläche der Probe beträgt Höhe x Breite = 13mm x 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

### Mikroschertest:

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in µm angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)x100 / max].

### Herstellung der Klebebänder

acResin A 260 UV (BASF) wurde in Butanon gelöst und Terpenphenolharz DT110 (Fa. DRT resins, Frankreich) bis zur in Tabelle 1 angegebenen Konzentration (Gew.-%, bezogen auf die Masse acResin A 260 UV) eingearbeitet. Die erhaltene Lösung wurde mit einem Streichbalken auf einer 75 µm dicken PET-Folie mit einem Flächengewicht von 60 g/m² ausgestrichen und getrocknet. Anschließend wurde die Masse mit einer Labor-UV-Anlage mit der in Tabelle 1 angegebenen UV-Dosis vernetzt.

Die Testergebnisse sind in Tabelle 1 enthalten.

**Tabelle 1: Beispiele und Testergebnisse**

| Nr. | Harzanteil (Gew.-%) | UV-Dosis (mJ/cm²) | TFT (min) | KKS 90°, 24 h (N/cm) | KKR 90°, 24 h (N/cm) | SSZ 10 N (min) | MSW/elast. (%) |
|---|---|---|---|---|---|---|---|
| 1 (Vgl.) | 0 | 20 | 274 | 11 | 4 | 306 | 91 |
| 2 | 3 | 20 | 404 | 13 | 5 | 27 | 61 |
| 3 (Vgl.) | 15 | 20 | 83 | 17 | 8 | 0 | 0 |
| 4 (Vgl.) | 0 | 40 | 64 | 7 | 2 | 336 | 91 |
| 5 | 3 | 35 | 751 | 12 | 10 | 393 | 84 |
| 6 (Vgl.) | 0 | 120 | 6 | 6 | 2 | 273 | 83 |
| 7 (Vgl.) | 15 | 120 | 499 | 14 | 4 | 71 | 39 |
| 8 (Vgl.) | 15 | 200 | 658 | 11 | 4 | n. g. | 53 |

| | | | | | | | |
|---|---|---|---|---|---|---|---|
| Vgl. = Vergleichsbeispiel, nicht erfindungsgemäß n. g. = nicht gemessen | | | | | | | |

Die Ergebnisse zeigen, dass durch den Einsatz eines Terpenphenolharzes im erfindungsgemäßen Konzentrationsbereich die Flaggingneigung signifikant verringert wird. Um eine derartige Erniedrigung der Flaggingtendenz (ausgedrückt durch ähnlich hohe Werte im TFT-Test) zu erreichen, muss bei hohen Harzkonzentrationen (15 %) eine UV-Dosis von mehr als 120 mJ/cm² gewählt werden. Die entsprechenden Klebebänder zeigen zwar eine den erfindungsgemäßen Klebebändern grundsätzlich vergleichbare Performance, allerdings wird das Spektrum der verwendbaren Träger sehr stark eingeschränkt. So wurde beispielsweise festgestellt, dass bei Verwendung von PET-Gewebe als Träger für Klebmassen mit einem Harzgehalt > 8 % bei UV-Dosen von mehr als 100 mJ/cm² trotz Einsatzes von Kühlwalzen eine derartige Erhitzung des Trägers eintrat, dass sich dieser unter starker Rauchentwicklung zersetzte.

## Patentansprüche

1. Zusammensetzung, enthaltend mindestens einen UV-vernetzbaren Polyacrylat-Schmelzklebstoff und mindestens ein Terpenphenolharz, wobei die Gesamtkonzentration der Terpenphenolharze, bezogen auf das Gesamtgewicht der Zusammensetzung, 2 bis 4 Gew.-% beträgt.

2. Zusammensetzung gemäß Anspruch 1, **dadurch gekennzeichnet, dass** die Gesamtkonzentration der Terpenphenolharze, bezogen auf das Gesamtgewicht der Zusammensetzung, 2,5 bis 3,5 Gew.-% beträgt.

3. Zusammensetzung gemäß mindestens einem der vorstehenden Ansprüche, **dadurch gekennzeichnet, dass** das Terpenphenolharz eine Erweichungstemperatur (Ring- & Ball-Erweichungspunkt, gemessen nach ASTM E28-99) von mindestens 90°C hat.

4. Haftklebmasse, erhältlich durch UV-Vernetzung einer Zusammensetzung gemäß mindestens einem der vorstehenden Ansprüche.

5. Haftklebemasse gemäß Anspruch 4, **dadurch gekennzeichnet, dass** die UV-Vernetzung bei einer UV-Dosis von < 100 mJ/cm² erfolgt.

6. Klebeband, erhältlich durch Auftragen einer Zusammensetzung gemäß mindestens einem der Ansprüche 1 bis 3 aus der Schmelze auf einen Träger und UV-Vernetzung der Zusammensetzung.

7. Klebeband gemäß Anspruch 6, **dadurch gekennzeichnet, dass** die Zusammensetzung mit einem Flächengewicht von 20 bis 120 g/m² aufgetragen wird.

8. Klebeband gemäß mindestens einem der Ansprüche 6 und 7, **dadurch gekennzeichnet, dass** die UV-Vernetzung bei einer UV-Dosis von < 100 mJ/cm² erfolgt.

9. Klebeband gemäß mindestens einem der Ansprüche 6 bis 8, **dadurch gekennzeichnet, dass** der Träger ein Gewebe-, Vlies- oder Folienträger ist.

10. Verwendung einer Zusammensetzung gemäß mindestens einem der Ansprüche 1 bis 3 zur Herstellung einer Haftklebemasse.

11. Verwendung einer Zusammensetzung gemäß mindestens einem der Ansprüche 1 bis 3 zur Herstellung von Klebebändern zur Kabelummantelung.

12. Verwendung einer Haftklebemasse gemäß mindestens einem der Ansprüche 4 und 5 zur Herstellung von Klebebändern zur Kabelummantelung.

13. Verwendung eines Klebebandes gemäß mindestens einem der Ansprüche 6 bis 9 zum Ummanteln von langgestrecktem Gut, wobei das Klebeband in einer Schraubenlinie um das langgestreckte Gut geführt wird.

14. Verwendung eines Klebebandes gemäß mindestens einem der Ansprüche 6 bis 9 zum Ummanteln von langgestrecktem Gut, wobei das langgestreckte Gut in axialer Richtung von dem Klebeband umhüllt wird.

15. Langgestrecktes Gut, ummantelt mit einem Klebeband gemäß mindestens einem der Ansprüche 6 bis 9.

## Claims

1. Composition comprising at least one UV-crosslinkable polyacrylate hotmelt adhesive and at least one terpene-phenolic resin, the total concentration of the terpene-phenolic resins being 2 to 4 wt%, based on the total weight of the composition.

2. Composition according to claim 1, **characterized in that** the total concentration of the terpene-phenolic resins is 2.5 to 3.5 wt%, based on the total weight of the composition.

3. Composition according to at least one of the preceding claims, **characterized in that** the terpene-phenolic resin has a softening temperature (Ring & Ball softening point, measured in accordance with ASTM E28-99) of at least 90°C.

4. Pressure-sensitive adhesive obtainable by UV-crosslinking a composition according to at least one of the preceding claims.

5. Pressure-sensitive adhesive according to Claim 4, **characterized in that** the UV crosslinking takes place at a UV dose of < 100 mJ/cm².

6. Adhesive tape obtained by applying a composition according to at least one of Claims 1 to 3 from the melt to a carrier and UV-crosslinking the composition.

7. Adhesive tape according to Claim 6, **characterized in that** the composition is applied with a weight per unit area of 20 to 120 g/m².

8. Adhesive tape according to at least one of Claims 6 and 7, **characterized in that** the UV crosslinking takes place at a UV dose of < 100 mJ/cm².

9. Adhesive tape according to at least one of Claims 6 to 8, **characterized in that** the carrier is a woven fabric, nonwoven or film carrier.

10. Use of a composition according to at least one of Claims 1 to 3 for producing a pressure-sensitive adhesive.

11. Use of a composition according to at least one of Claims 1 to 3 for producing adhesive tapes for cable wrapping.

12. Use of a pressure-sensitive adhesive according to at least one of Claims 4 and 5 for producing adhesive tapes for cable wrapping.

13. Use of an adhesive tape according to at least one of Claims 6 to 9 for wrapping elongate material, where the adhesive tape is guided in a helical line around the elongate material.

14. Use of an adhesive tape according to at least one of Claims 6 to 9 for wrapping elongate material, where the elongate material is enveloped in axial direction by the adhesive tape.

15. Elongate material wrapped with an adhesive tape according to at least one of Claims 6 to 9.

## Revendications

1. Composition contenant au moins un adhésif fusible à base de polyacrylate, réticulable par UV, et au moins une résine à base de terpènephénol, la concentration totale en résines à base de terpènephénol, par rapport au poids total de la composition, étant de 2 à 4% en poids.

2. Composition selon revendication 1, **caractérisée en ce que** la concentration totale en résines à base de terpènephénol, par rapport au poids total de la composition, est de 2,5 à 3,5% en poids.

3. Composition selon au moins l'une quelconque des revendications précédentes, **caractérisée en ce que** la résine à base de terpènephénol présente une température de ramollissement (température de ramollissement par anneau & bille, mesurée selon la norme ASTM E28-99), d'au moins 90°C.

4. Masse autoadhésive, pouvant être obtenue par une réticulation par UV d'une composition selon au moins l'une quelconque des revendications précédentes.

5. Masse autoadhésive selon la revendication 4, **caractérisée en ce que** la réticulation par UV a lieu à une dose d'UV < 100 mJ/cm².

6. Ruban adhésif, pouvant être obtenu par application d'une composition selon au moins l'une quelconque des revendications 1 à 3 en masse fondue sur un support et par réticulation par UV de la composition..

7. Ruban adhésif selon la revendication 6, **caractérisé en ce que** la composition est appliquée en un poids surfacique de 20 à 120 g/m².

8. Ruban adhésif selon au moins l'une quelconque des revendications 6 et 7, **caractérisé en ce que** la réticulation par UV a lieu à une dose d'UV < 100 mJ/cm².

9. Ruban adhésif selon au moins l'une quelconque des revendications 6 et 8, **caractérisé en ce que** le support est un support en tissu, en non-tissé ou en feuille.

10. Utilisation d'une composition selon au moins l'une quelconque des revendications 1 à 3 pour la préparation d'une masse autoadhésive.

11. Utilisation d'une composition selon au moins l'une quelconque des revendications 1 à 3 pour la fabrication de rubans adhésifs pour envelopper des câbles.

12. Utilisation d'une masse autoadhésive selon au moins l'une quelconque des revendications 4 et 5 pour la fabrication de rubans adhésifs pour envelopper des câbles.

13. Utilisation d'un ruban adhésif selon au moins l'une quelconque des revendications 6 à 9 pour envelopper un produit allongé, le ruban adhésif étant guidé selon une ligne en hélice autour du produit allongé.

14. Utilisation d'un ruban adhésif selon au moins l'une quelconque des revendications 6 à 9 pour envelopper un produit allongé, le produit allongé étant entouré en direction axiale par le ruban adhésif.

15. Produit allongé, enveloppé par un ruban adhésif selon au moins l'une quelconque des revendications 6 à 9.
